# EUROPÄISCHE PATENTSCHRIFT

(11) **EP 1 296 558 B1**
(45) Veröffentlichungstag und Bekanntmachung des Hinweises auf die Patenterteilung: **14.06.2006**
(21) Anmeldenummer: 01957831.9
(22) Anmeldetag: 08.06.2001
(51) Int. Cl.: A01N 43/80, A01N 61/00, A01N 43/56, A01N 43/08, A01N 41/10, A01N 25/30

(54) **HERBIZIDE MITTEL**
HERBICIDAL AGENTS
AGENTS HERBICIDES

(30) Priorität: 19.06.2000 DE 10029165
(43) Veröffentlichungstag der Anmeldung: 02.04.2003
(73) Patentinhaber: Bayer CropScience GmbH, 65929 Frankfurt (DE)
(72) Erfinder: KRAUSE, Hans-Peter, 65719 Hofheim (DE); KOCUR, Jean, 65719 Hofheim (DE); MARTINEZ DE UNA, Julio, 65835 Liederbach (DE); BICKERS, Udo, 49835 Wietmarschen (DE); HACKER, Erwin, 65239 Hochheim (DE); SCHNABEL, Gerhard, 63820 Elsenfeld (DE)
(86) Internationale Anmeldenummer: PCT/EP2001/006514
(87) Internationale Veröffentlichungsnummer: WO 2001/097614

(56) Entgegenhaltungen:
- EP-A- 0 968 649
- WO-A-00/30447
- WO-A-00/53014
- WO-A-92/19107
- WO-A-98/31223
- WO-A-98/42678
- WO-A-99/23886
- WO-A-99/63823
- B.G.YOUNG ET AL.: "Optimizing foliar activity of isoxaflutole on giant foxtail (Setaria faberi) with various adjuvants" WEED SCIENCE, Bd. 46, Nr. 4, 1998, Seiten 397-402, XP001034282

## Beschreibung

Die Erfindung bezieht sich auf das technische Gebiet der Pflanzenschutzmittel, insbesondere betrifft die Erfindung herbizide Mittel mit einem Gehalt an bestimmten herbiziden Verbindungen und speziellen Tensiden, die sich hervorragend zur Bekämpfung von Schadpflanzen in Pflanzenkulturen eignen.

Einige neuere herbizide Wirkstoffe, die die p-Hydroxyphenyl-Pyruvat-Dioxygenase (HPPDO) inhibieren, zeigen sehr gute anwendungstechnische Eigenschaften und können in sehr kleinen Aufwandmengen gegen ein breites Spektrum von grasartigen und breitblättrigen Unkräutern eingesetzt werden (siehe z.B. M.P. Prisbylla et al-, Brighton Crop Protection Conference - Weeds (1993), 731-738).

Aus WO 00/30447 sind unter anderem Mischungen von Herbiziden mit bestimmten Tensiden und Safenern bekannt.

Weiterhin ist aus verschiedenen Schriften bekannt, daß Herbiziden aus der Reihe der Benzoylcyclohexandione als Inhibitoren der para-Hydroxyphenylpyruvat-Dioxygenase derselbe Wirkmechanismus zugrunde liegt, wie denen aus der Reihe der Benzoylisoxazole, vergleiche dazu J. Pesticide Sci. 21, 473-478 (1996); Weed Science 45, 601-609 (1997), Pesticide Science 50, 83-84, (1997) und Pesticide Outlook, 29-32, (December 1996). Darüberhinaus ist aus Pesticide Science 50, 83-84, (1997) bekannt, daß Benzoylisoxazole unter bestimmten Bedingungen zu Benzoyl-3-oxopropionitrilen umlagern können.

Ebenso ist bekannt, dass die vorstehend genannten herbiziden Verbindungen zur Herstellung von Standardformulierungen mit Tensiden kombiniert werden können.

So beschreibt beispielsweise WO 98/31223 die Verwendung von Mischungen enthaltend einen Fettsäureester oder eine Alkoxy-Fettsäure, ein Terpenderivat und ein Pestizid. EP-A 0 968 649 beschreibt Trockenformulierungen von Herbiziden enthaltend ethoxylierte Fettalkohole. Die darin genannten ein Herbizid enthaltenden Mischungen weisen jedoch nicht immer die gewünschte hohe herbizide Wirkung auf.

Die Aufgabe der vorliegenden Erfindung bestand darin, herbizide Mittel bereitzustellen, welche eine besonders hohe herbizide Wirkung aufweisen.

Es wurde nun überraschend gefunden, daß herbizide Mittel, die das Herbizid der nachstehend genannten Formel in Kombination mit speziellen Tensiden enthalten, diese Aufgabe erfüllen.

Die vorliegende Erfindung betrifft somit herbizide Mittel, enthaltend
A) die Verbindung der Formel A16 (Komponente A) 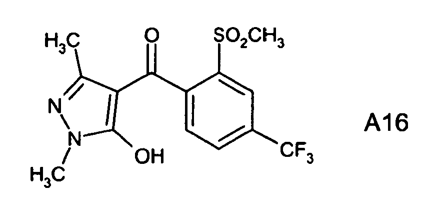 und
B) ein Tensid der Formel (II) (Komponente B)

   R^{γ}-(EO)ₓ (PO)_{y} (EO)_{z}-R^{δ} (II),

   worin die Subsituenten und Indices folgende Bedeutungen haben:
   - PO: bedeutet eine Propylenoxy-Einheit;
   - EO: bedeutet eine Ethylenoxy-Einheit;
   und
   a)
      - R^{γ}: bedeutet Octyloxy;
      - R^{δ}: bedeutet Wassserstoff;
      - x: bedeutet 10, 12 oder 15, und
      - y und z: bedeuten jeweils 0; oder
   b)
      - R^{γ}: bedeutet Decyloxy;
      - R^{δ}: bedeutet Wassserstoff;
      - x: bedeutet 10, 15 oder 20, und
      - y und z: bedeuten jeweils 0; oder
   c)
      - R^{γ}: bedeutet Tridecyloxy;
      - R^{δ}: bedeutet Wassserstoff;
      - x: bedeutet 10, 11, 12, 13, 14, 15, 16, 17, 18, 19, 20, 25 oder 30 und
      - y und z: bedeuten jeweils 0; oder
   d)
      - R^{γ}: bedeutet Tridecyloxy;
      - R^{δ}: bedeutet Methyl;
      - x: bedeutet 15 oder 17 und
      - y und z: bedeuten jeweils 0; oder
   e)
      - R^{δ}: bedeutet Tridecyloxy;
      - R^{δ}: bedeutet Methylcarbonyl;
      - x: bedeutet 15 oder 17 und
      - y und z: bedeuten jeweils 0; oder
   f)
      - R^{γ}: bedeutet Dodecyloxy;
      - R^{δ}: bedeutet Wassserstoff;
      - x: bedeutet 10, 11, 12, 13, 14, 15, 16, 17 oder 20 und
      - y und z: bedeuten jeweils 0; oder
   g)
      - R^{γ}: bedeutet Dodecyloxy;
      - R^{δ}: bedeutet Methyl oder Methylcarbonyl;
      - x: bedeutet 15, und
      - y und z: bedeuten jeweils 0; oder
   h)
      - R^{γ}: bedeutet Tetradecyloxy;
      - R^{δ}: bedeutet Wasserstoff;
      - x: bedeutet 10, 11, 12, 13, 14, 15, 16, 17, 18, 19, 20, 25, 30 oder 40, und
      - y und z: bedeuten jeweils 0; oder
   i)
      - R^{γ}: bedeutet Hexadecyloxy;
      - R^{δ}: bedeutet Wasserstoff;
      - x: bedeutet 10, 15, 20 oder 40, und
      - y und z: bedeuten jeweils 0; oder
   j)
      - R^{γ}: bedeutet Octadecyloxy;
      - R^{δ}: bedeutet Wasserstoff;
      - x: bedeutet 15 oder 20, und
      - y und z: bedeuten jeweils 0; oder
   k)
      - R^{γ}: bedeutet Nonylcarbonyloxy;
      - R^{δ}: bedeutet Methyl;
      - x: bedeutet 10, 11, 12, 13, 14, 15, 16 oder 20, und
      - y und z: bedeuten jeweils 0; oder
   l)
      - R^{γ}: bedeutet Decylcarbonyloxy;
      - R^{δ}: bedeutet Methyl;
      - x: bedeutet 10, 15 oder 20, und
      - y und z: bedeuten jeweils 0; oder
   m)
      - R^{γ}: bedeutet Undecylcarbonyloxy;
      - R^{δ}: bedeutet Methyl;
      - x: bedeutet 10, 11, 12, 13, 14, 15, 16, 17, 20 oder 25, und
      - y und z: bedeuten jeweils 0; oder
   n)
      - R^{γ}: bedeutet Dodecylcarbonyloxy;
      - R^{δ}: bedeutet Methyl;
      - x: bedeutet 10, 15, 20 oder 25, und
      - y und z: bedeuten jeweils 0; oder
   o)
      - R^{γ}: bedeutet Tridecylcarbonyloxy;
      - R^{δ}: bedeutet Methyl;
      - x: bedeutet 10, 15 oder 20, und
      - y und z: bedeuten jeweils 0; oder
   p)
      - R^{γ}: bedeutet Pentadecylcarbonyloxy;
      - R^{δ}: bedeutet Methyl;
      - x: bedeutet 15 oder 20, und
      - y und z: bedeuten jeweils 0; oder
   q)
      - R^{γ}: bedeutet Nonylcarbonyloxy;
      - R^{δ}: bedeutet Nonylcarbonyl;
      - x: bedeutet 10, 15 oder 20, und
      - y und z: bedeuten jeweils 0; oder
   r)
      - R^{γ}: bedeutet Undecylcarbonyloxy;
      - R^{δ}: bedeutet Undecylcarbonyl;
      - x: bedeutet 10, 15, 20 oder 30, und
      - y und z: bedeuten jeweils 0; oder
   s)
      - R^{γ}: bedeutet Dodecylcarbonyloxy;
      - R^{δ}: bedeutet Dodecylcarbonyl;
      - x: bedeutet 10, 15 oder 20, und
      - y und z: bedeuten jeweils 0; oder
   t)
      - R^{γ}: bedeutet Tridecylcarbonyloxy;
      - R^{δ}: bedeutet Tridecylcarbonyl;
      - x: bedeutet 10 oder 20, und
      - y und z: bedeuten jeweils 0; oder
   u)
      - R^{γ}: bedeutet Pentadecylcarbonyloxy;
      - R^{δ}: bedeutet Pentadecylcarbonyl;
      - x: bedeutet 10 oder 15, und
      - y und z: bedeuten jeweils 0; oder
   v)
      - R^{γ}: bedeutet Isotridecylcarbonyloxy;
      - R^{δ}: bedeutet Wasserstoff;
      - x: bedeutet 0;
      - y: bedeutet 2 oder 5;
      - z: bedeutet 10, oder
   W)
      - R^{γ}: bedeutet Isotridecylcarbonyloxy;
      - R^{δ}: bedeutet Wasserstoff;
      - x: bedeutet 10;
      - y: bedeutet 2;
      - z: bedeutet 0, oder
   x)
      - R^{γ}: bedeutet Isotridecylcarbonyloxy;
      - R^{δ}: bedeutet Wasserstoff;
      - x: bedeutet 10;
      - y: bedeutet 5;
      - z: bedeutet 10, oder
   y)
      - R^{γ}: bedeutet einen Rest aus der Gruppe 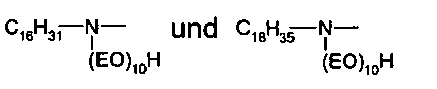
      - R^{δ}: bedeutet Wasserstoff;
      - x: bedeutet 10;
      - y und z: bedeuten jeweils 0; oder
   z)
      - R^{γ}: bedeutet Pentadecylcarbonyloxy oder Heptadecylcarbonyloxy;
      - R^{δ}: bedeutet Methyl;
      - x: bedeutet 9;
      - y: bedeutet 2;
      - z: bedeutet 0; oder
   aa)
      - R^{γ}: bedeutet Dodecyloxy oder Tetradecyloxy;
      - R^{δ}: bedeutet Wasserstoff;
      - x: bedeutet 6;
      - y: bedeutet 4;
      - z: bedeutet 0.

Tenside B), z.B. der Formel (II) sind literaturbekannt, z.B. aus McCutcheon's, Emulsifiers&Detergents 1994, Vol. 1: North American Edition und Vol. 2, International Edition; McCutcheon Division, Glen Rock NJ, USA sowie aus "Surfactants in Consumer Products", J. Falbe, Springer-Verlag Berlin, 1987. Die hierin genannten Tenside B) sind durch Bezugnahme Bestandteil dieser Beschreibung. Außerdem sind Tenside B), z.B. der Formel (II) auch kommerziell erhältlich, z.B. unter den Markennamen Genapol® X oder O oder T-Reihe, Sapogenat® T-Reihe, Arkopal® N-Reihe, Afilan® PTU, Hordaphos® und Emulsogen®⁻Reihe von Clariant AG; Agrilan® -Typen von Akcros Organics; Alkamul® und Antarox® -Typen von Rhodia; Emulan® -Typen (NP, OC, OG, OK) von BASF AG; Dehydol® -Typen von Henkel; Agent W® -Typen von Stepan Company; Crodamel®⁻Typen von Croda GmbH. Die in den jeweiligen Produktbroschüren genannten Tenside B) sind durch Bezugnahme Bestandteil dieser Beschreibung.

Beispiele für Tenside B), z.B. der Formel (II) sind in der nachfolgenden Tabelle 1 aufgeführt:

**Tabelle 1**

| Bsp.-Nr. | R^{γ} | x | y | z | R^{δ} |
|---|---|---|---|---|---|
| 1 | Octyl-O- | 10 | - | - | H |
| 2 | " | 12 | - | - | H |
| 3 | " | 15 | - | - | H |
| 4 | Decyl -O- | 10 | - | - | H |
| 5 | " | 15 | - | - | H |
| 6 | " | 20 | - | - | H |
| 7 | Tridecyl - O - | 10 | - | - | H |
| 8 | " | 11 | - | - | H |
| 9 | " | 12 | - | - | H |
| 10 | " | 13 | - | - | H |
| 11 | " | 14 | - | - | H |
| 12 | " | 15 | - | - | H |
| 13 | " | 16 | - | - | H |
| 14 | " | 17 | - | - | H |
| 15 | " | 18 | - | - | H |
| 16 | " | 19 | - | - | H |
| 17 | " | 20 | - | - | H |
| 18 | " | 25 | - | - | H |
| 19 | " | 30 | - | - | H |
| 20 | " | 15 | - | - | Me |
| 21 | " | 17 | - | - | Me |
| 22 | " | 15 | - | - | COCH₃ |
| 23 | " | 17 | - | - | COCH₃ |
| 24 | (C₁₂-Alkyl)-O- | 10 | - | - | H |
| 25 | " | 11 | - | - | H |
| 26 | " | 12 | - | - | H |
| 27 | " | 13 | - | - | H |
| 28 | " | 14 | - | - | H |
| 29 | " | 15 | - | - | H |
| 30 | " | 16 | - | - | H |
| 31 | (C₁₂-Alkyl)-O- | 17 | - | - | H |
| 32 | " | 20 | - | - | H |
| 33 | " | 15 | - | - | Me |
| 34 | " | 15 | - | - | COCH₃ |
| 35 | (C₁₄-Alkyl)-O- | 10 | - | - | H |
| 36 | " | 11 | - | - | H |
| 37 | " | 12 | - | - | H |
| 38 | " | 13 | - | - | H |
| 39 | " | 14 | - | - | H |
| 40 | " | 15 | - | - | H |
| 41 | " | 16 | - | - | H |
| 42 | " | 17 | - | - | H |
| 43 | " | 18 | - | - | H |
| 44 | " | 19 | - | - | H |
| 45 | " | 20 | - | - | H |
| 46 | " | 25 | - | - | H |
| 47 | " | 30 | - | - | H |
| 48 | " | 40 | - | - | H |
| 49 | (C₁₆-Alkyl)-O- | 10 | - | - | H |
| 50 | " | 15 | - | - | H |
| 51 | " | 20 | - | - | H |
| 52 | " | 40 | - | - | H |
| 53 | (C₁₈-Alkyl)-O- | 15 | - | - | H |
| 54 | " | 20 | - | - | H |
| 55 | (C₉-Alkyl)-CO-O- | 10 | - | - | Me |
| 56 | " | 11 | - | - | Me |
| 57 | " | 12 | - | - | Me |
| 58 | " | 13 | - | - | Me |
| 59 | " | 14 | - | - | Me |
| 60 | " | 15 | - | - | Me |
| 61 | " | 16 | - | - | Me |
| 62 | " | 20 | - | - | Me |
| 63 | (C₁₀-Alkyl)-CO-O- | 10 | - | - | Me |
| 64 | (C₁₀-Alkyl)-CO-O- | 15 | - | - | Me |
| 65 | " | 20 | - | - | Me |
| 66 | (C₁₁-Alkyl)-CO-O- | 10 | - | - | Me |
| 67 | | 11 | - | - | Me |
| 68 | " | 12 | - | - | Me |
| 69 | " | 13 | - | - | Me |
| 70 | " | 14 | - | - | Me |
| 71 | " | 15 | - | - | Me |
| 72 | " | 16 | - | - | Me |
| 73 | " | 17 | - | - | Me |
| 74 | " | 20 | - | - | Me |
| 75 | " | 25 | - | - | Me |
| 76 | (C₁₂-Alkyl)-CO-O- | 10 | - | - | Me |
| 77 | " | 15 | - | - | Me |
| 78 | " | 20 | - | - | Me |
| 79 | " | 25 | - | - | Me |
| 80 | (C₁₃-Alkyl)-CO-O- | 15 | - | - | Me |
| 81 | " | 10 | - | - | Me |
| 82 | " | 20 | - | - | Me |
| 83 | (C₁₅-Alkyl)-CO-O- | 15 | - | - | Me |
| 84 | " | 20 | - | - | Me |
| 85 | (C₉-Alkyl)-CO-O- | 10 | - | - | (C₉-Alkyl)-CO |
| 86 | " | 15 | - | - | " |
| 87 | " | 20 | - | - | " |
| 88 | (C₁₁-Alkyl)-CO-O- | 10 | - | - | (C₁₁-Alkyl)-CO |
| 89 | " | 15 | - | - | " |
| 90 | " | 20 | - | - | " |
| 91 | " | 30 | - | - | " |
| 92 | (C₁₂-Alkyl)-CO-O- | 10 | - | - | (C₁₂-Alkyl)-CO |
| 93 | " | 15 | - | - | " |
| 94 | " | 20 | - | - | " |
| 95 | (C₁₃-Alkyl)-CO-O- | 10 | - | - | (C₁₃-Alkyl)-CO |
| 96 | " | 20 | - | - | " |
| 97 | (C₁₅-Alkyl)-CO-O- | 10 | - | - | (C₁₅-Alkyl)-CO |
| 98 | " | 15 | - | - | " |
| 99 | Isotridecyl-O- | - | 5 | 10 | H |
| 100 | " | - | 2 | 10 | H |
| 101 | " | 10 | 2 | - | H |
| 102 | " | 10 | 5 | 10 | H |
| 103 (Genamin ® 0 200, Clariant) | 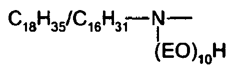 | 10 | - | - | H |
| 104 (Afilan ® PTU, Clariant) | C₁₅H₂₉/C₁₇H₃₃-CO-O- | 9 | 2 | - | Me |
| 105 (Genapol ® 3938, Clariant) | C₁₂H₂₅/C₁₄H₂₉-O- | 6 | 4 | - | H |

Die Verbindung A16 enthält ein acides Proton enthalten, das durch Umsetzung mit einer Base entfernt werden kann. Als Basen eignen sich beispielsweise Hydride, Hydroxide und Carbonate von Lithium, Natrium, Kalium, Magnesium und Calcium sowie Ammoniak und organische Amine wie Triethylamin und Pyridin. Solche Salze sind ebenfalls von der vorliegenden Erfindung umfaßt.

Sofern es im einzelnen nicht anders definiert wird, gelten für die Reste in Formel (II) im allgemeinen die folgenden Definitionen.

Die kohlenstoffhaltigen Reste wie Alkyl, Alkoxy, Haloalkyl, Haloalkoxy, Alkylamino und Alkylthio sowie die entsprechenden ungesättigten und/oder substituierten Reste im Kohlenstoffgerüst jeweils geradkettig oder verzweigt sein. Wenn nicht speziell angegeben, sind bei diesen Resten die niederen Kohlenstoffgerüste, .z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl.

Von der Formel (II) umfaßt sind auch alle Stereoisomeren, welche die gleiche topologische Verknüpfung der Atome aufweisen, und deren Gemische. Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-Isomere und Tautomere, können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Das Herbizid A16 ist beispielsweise aus WO 01/74785 bekannt.

Die zitierte Schrift enthält ausführliche Angaben zu Herstellungsverfahren und Ausgangsmaterialien. Auf diese Schrift wird ausdrücklich Bezug genommen, sie gilt durch Zitat als Bestandteil dieser Beschreibung.

Die erfindungsgemäßen herbiziden Mittel, enthaltend Verbindung A16 und Tenside B), zeigen eine ausgezeichnete herbizide Wirkung und in einer bevorzugten Ausführungsform überadditive Effekte. Aufgrund der verbesserten Kontrolle der Schadpflanzen durch die erfindungsgemäßen herbiziden Mittel wird es möglich, die Aufwandmenge zu senken und/oder die Sicherheitsmarge zu erhöhen. Beides ist sowohl ökonomisch als auch ökologisch sinnvoll. Die Wahl der von den Komponenten A) + B) einzusetzenden Mengen und das Verhältnis der Komponenten A): B) sind dabei von einer ganzen Reihe von Faktoren abhängig.

In bevorzugter Ausführungsform kennzeichnen sich erfindungsgemäße herbizide Mittel dadurch, daß sie einen synergistisch wirksamen Gehalt einer Kombination der Verbindung A16 mit Tensiden B) aufweisen. Dabei ist vor allem hervorzuheben, daß selbst in Kombinationen mit Aufwandmengen oder Gewichtsverhältnissen von A): B) bei denen ein Synergismus nicht in jedem Falle ohne weiteres nachzuweisen ist - etwa weil die Einzelverbindungen üblicherweise in der Kombination in sehr unterschiedlichen Aufwandmengen eingesetzt werden oder auch weil die Kontrolle der Schadpflanzen bereits durch die Einzelverbindungen sehr gut ist - den herbiziden Mitteln der Erfindung in der Regel eine synergistische Wirkung inhärent ist.

Die Komponenten A) und B) der erfindungsgemäßen herbiziden Mittel können separat formuliert und im Tank-Misch-Verfahren appliziert werden, oder sie können zusammen in einer Fertigformulierung enthalten sein, die dann in üblicher Weise beispielsweise in Form einer Spritzbrühe appliziert werden kann.

Die erfindungsgemäßen herbiziden Mittel können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), wasserlösliche Pulver (SP), wasserlösliche Konzentrate (SL), emulgierbare Konzentrate (EC), Emulsionen (EW), wie Öl-in-Wasser- und Wasser-in-Öl-Emulsionen, versprühbare Lösungen, Suspensionskonzentrate (SC), Dispersionen auf Öl- oder Wasserbasis, ölmischbare Lösungen, Kapselsuspensionen (CS), Stäubemittel (DP), Granulate für die Streu-und Bodenapplikation, Granulate (GR) in Form von Mikro-, Sprüh-, Aufzugs- und Adsorptionsgranulaten, wasserdispergierbare Granulate (WG), wasserlösliche Granulate (SG), ULV-Formulierungen, Mikrokapseln und Wachse. Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986, Wade van Valkenburg, "Pesticide Formulations", Marcel Dekker, N.Y., 1973; K. Martens, "Spray Drying" Handbook, 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen, von der Komponente A) verschiedenen agrochemischen Wirkstoffen wie Insektiziden, Akariziden, Herbiziden, Fungiziden, Safenern, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff A) und / oder dem Tensid B) außer einem Verdünnungs- oder Inertstoff noch von Tensid B) verschiedene Tenside ionischer und/oder nichtionischer Art (Netzmittel, Dispergiermittel), z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2¹-dinaphthylmethan-6,6¹-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe A) und / oder Tenside B) beispielsweise in üblichen Apparaturen wie Hammermühlen, Gebläsemühlen und Luftstrahlmühlen feingemahlen und gleichzeitig oder anschließend mit den Formulierungshilfsmitteln vermischt.

Emulgierbare Konzentrate werden durch Auflösen des Wirkstoffes A) und / oder des Tensids B) in einem organischen Lösungsmittel z.B. Butanol, Cyclohexanon, Dimethylformamid, Xylol oder auch höhersiedenden Aromaten oder Kohlenwasserstoffen oder Mischungen der organischen Lösungsmittel unter Zusatz von einem oder mehreren von Tensid B) verschiedenen Tensiden ionischer und/oder nichtionischer Art (Emulgatoren) hergestellt. Als Emulgatoren können beispielsweise verwendet werden: Alkylarylsulfonsaure Calzium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanester wie z.B. Sorbitanfettsäureester oder Polyoxethylensorbitanester wie z.B. Polyoxyethylensorbitanfettsäureester.

Wasserlösliche Konzentrate werden beispielsweise erhalten, indem der Wirkstoff A) und / oder das Tensid B) in Wasser oder in einem mit Wasser mischbaren Solvens gelöst wird und gegebenenfalls mit weiteren Hilfsstoffen wie wasserlöslichen Tensiden versetzt wird.

Stäubemittel erhält man durch Vermahlen des Wirkstoffes A) und / oder des Tensids B) mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls unter Zusatz von Tensid B) verschiedener Tenside, wie sie z.B. oben bei den anderen Formulierungstypen bereits aufgeführt sind, hergestellt werden.

Emulsionen, z.B. Öl-in-Wasser-Emulsionen (EW), lassen sich beispielsweise mittels Rührem, Kolloidmühlen und/oder statischen Mischern unter Verwendung von wäßrigen organischen Lösungsmitteln und gegebenenfalls von Tensid B) verschiedenen Tensiden, wie sie z.B. oben bei den anderen Formulierungstypen bereits aufgeführt sind, herstellen.

Granulate können entweder durch Verdüsen des Wirkstoffes A) und / oder Tensids B) auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe A) und / oder Tenside B) in der für die Herstellung von Düngemittelgranulaten üblichen Weise - gewünschtenfalls in Mischung mit Düngemitteln - granuliert werden.

Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischem und Extrusion ohne festes Inertmaterial hergestellt.

Zur Herstellung von Teller-, Fließbett-, Extruder- und Sprühgranulate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die erfindungsgemäßen herbiziden Mittel enthalten in der Regel 0,01 bis 99 Gew.-%, insbesondere 0,1 bis 95 Gew.-%, einer oder mehrerer Verbindungen der Formel (I).

In Spritzpulvern beträgt die Wirkstoffkonzentration z.B. etwa 10 bis 90 Gew.-%, der Rest zu 100 Gew.-% besteht aus üblichen Formulierungsbestandteilen und gegebenenfalls Tensiden B). Bei emulgierbaren Konzentraten kann die Wirkstoffkonzentration etwa 1 bis 90, vorzugsweise 5 bis 80 Gew.-% betragen. Staubförmige Formulierungen enthalten 1 bis 30 Gew.-% Wirkstoff, vorzugsweise meistens 5 bis 20 Gew.-% an Wirkstoff, versprühbare Lösungen enthalten etwa 0.05 bis 80, vorzugsweise 2 bis 50 Gew.-% Wirkstoff. Bei wasserdispergierbaren Granulaten hängt der Wirkstoffgehalt zum Teil davon ab, ob die wirksame Verbindung flüssig oder fest vorliegt und welche Granulierhilfsmittel, Füllstoffe usw. verwendet werden. Bei den in Wasser dispergierbaren Granulaten liegt der Gehalt an Wirkstoff beispielsweise zwischen 1 und 95 Gew.-%, vorzugsweise zwischen 10 und 80 Gew.-%.

Daneben enthalten die genannten Wirkstofformulierungen gegebenenfalls die jeweils üblichen Hilfsstoffe wie Haft-, Netz-, Dispergier-, Emulgier-, Penetrations-, Konservierungs-, Frostschutz- und Lösungsmittel, Füll-, Träger- und Farbstoffe, Entschäumer, Adjuvants wie Mineral- oder Pflanzenöle und deren Derivate, Verdunstungshemmer und den pH-Wert und die Viskosität beeinflussende Mittel.

Die erfindungsgemäßen herbiziden Mittel lassen sich durch übliche Verfahren herstellen, z.B. durch Vermischen der Komponenten mit Hilfe von Rührem, Schüttlem oder (statischen) Mischem.

Eine bevorzugte Ausführungsvariante dieser Erfindung besteht darin, daß Formulierungen, die die Verbindung A16 enthalten, im Spritztank mit Tensiden B) und / oder deren Formulierungen gemischt werden. Die Verbindungen der Formel (I) lassen sich hierzu beispielsweise auf Basis von Kaolin als wasserdispergierbare Granulate formulieren, wobei der Gehalt an Verbindungen der Formel (I) in weiten Bereichen zwischen 0,01 und 99 Gew.-%, vorzugsweise zwischen 0,5 und 80 Gew.-%, schwanken kann. Diese Formulierungen können neben den Verbindungen der Formel (I) weitere agrochemische Wirkstoffe, wie Safener enthalten, z.B. in einem Gehalt 0,1 - 50 Gew.-%, vorzugsweise 0,5 - 40 Gew.-%. Die Tenside B) können als Reinsubstanzen oder in formulierter Form, vorzugsweise als flüssiges Produkt wie wasserlösliche Konzentrate oder emulgierbare Konzentrate, zugesetzt werden.

Fertigformulierungen können erhalten werden, indem z.B. emulgierbare Konzentrate oder Öldispersionen aus Verbindungen der Formel (I), Tensiden B) und weiteren Hilfsstoffen hergestellt werden. In den Fertigformulierungen kann der Gehalt an Verbindungen der Formel (I) in weiten Bereichen schwanken und beträgt im allgemeinen zwischen 0,01 und 99 Gew.-%, vorzugsweise zwischen 0,1 und 60 Gew.-%. Der Gehalt an Tensiden B) kann ebenfalls in weiten Bereichen schwanken und beträgt im allgemeinen zwischen 1 und 80 Gew.-%, in der Regel zwischen 5 und 50 Gew.-%. Schließlich können die Fertigformulierungen auch weitere agrochemische Wirkstoffe wie Safener enthalten, z.B. in einem Gehalt von 0,01-60 Gew.-%, vorzugsweise 0,1-40 Gew.-%.

Die Formulierungen können gegebenenfalls Hilfsstoffe wie Lösungsmittel enthalten, z.B. aromatische Lösungsmittel wie Xylole oder Aromatengemische aus der Solvesso® -Reihe wie Solvesso® 100, Solvesso® 150 oder Solvesso® 200 von Exxon; alphatische oder isoparaffinische Lösemittel wie Produkte aus der Exxol® -D- bzw. Isopur® -Reihe von Exxon; Öle pflanzlicher oder tierischer Herkunft sowie deren Derivate, wie Rapsöle oder Rapsöl-methylester ; Ester wie Butyl-Acetat; Ether wie Diethylether, THF oder Dioxan. Der Lösungsmittelgehalt beträgt bevorzugt 1-95 Gew.-%, besonders bevorzugt 5-80 Gew.-%. Weitere geeignete Hilfstoffe sind z.B. Emulgatoren (bevorzugter Gehalt: 0,1-10 Gew.-%), Dispergatoren (bevorzugter Gehalt: 0,1-10 Gew.-%) und Verdicker (bevorzugter Gehalt: 0,1 - 5 Gew.-%), sowie gegebenenfalls Stabilisatoren wie Entschäumer, Wasserfänger, Säurefänger und Kristallisationsinhibitoren.

Der Einsatz der erfindungsgemäßen herbiziden Mittel kann im Vor- oder im Nachauflaufverfahren erfolgen, z. B. durch Spritzung. Durch den Einsatz der Mischungen kann der zur Unkrautbekämpfung notwendige Präparateaufwand wesentlich reduziert werden.

Die erfindungsgemäß zu verwendenden Tenside B) werden in der Regel zusammen mit der Verbindung A16 oder unmittelbar hintereinander ausgebracht, vorzugsweise in Form einer Spritzbrühe, welche die Tenside B) und die Verbindung A16 in wirksamen Mengen und gegebenenfalls weitere übliche Hilfsmittel enthält. Die Spritzbrühe wird bevorzugt auf Basis von Wasser und / oder einem Öl, z.B. einem hochsiedenden Kohlenwasserstoff wie Kerosin oder Paraffin hergestellt. Dabei können die erfindungsgemäßen herbiziden Mittel als Tankmischung oder über eine "Fertig-Formulierung" realisiert werden.

Das Gewichtsverhältnis von Verbindung A16 zu Tensid B) kann in einem weiten Bereich varüeren und hängt z.B. von der Wirksamkeit des Herbizids. In der Regel ist es im Bereich von 10:1 bis 1:5000, vorzugsweise 4:1 bis 1:2000.

Die Aufwandmengen der Verbindung A16 liegen im allgemeinen zwischen 0,1 und 500 g AS/ha (AS = Aktivsubstanz, d. h. Aufwandmenge bezogen auf den aktiven Wirkstoff), bevorzugt zwischen 0,5 und 200 g ai/ha. Die Aufwandmengen an Tensiden B) liegen im allgemeinen zwischen 1 und 5000 g Tensid / ha, bevorzugt werden 10 und 2000g Tensid / ha.
Die Konzentration der erfindungsgemäß zu verwendenden Tenside B) ist in einer Spritzbrühe in der Regel von 0,05 bis 4 Gew.-%, vorzugsweise 0,1 bis 1 Gew.-%, insbesondere 0,1 bis 0,3 Gew.-% Tensid.

Die erfindungsgemäßen herbiziden Mittel, weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfaßt. Dabei ist es gleichgültig, ob die Substanzen im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen herbiziden Mittel kontrolliert werden können, ohne daß durch die Nennung eine Beschränkung auf bestimmte Arten erfolgen soll.

Auf der Seite der monokotylen Unkrautarten werden z.B. Avena, Lolium, Alopecurus, Phalaris, Echinochloa, Digitaria, Setaria sowie Cyperusarten aus der annuellen Gruppe und auf seiten der perennierenden Spezies Agropyron, Cynodon, Imperata sowie Sorghum und auch ausdauemde Cyperusarten gut erfaßt.

Bei dikotylen Unkrautarten erstreckt sich das Wirkungsspektrum auf Arten wie z.B. Galium, Viola, Veronica, Lamium, Stellaria, Amaranthus, Sinapis, Ipomoea, Matricaria, Abutilon und Sida auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den erfindungsgemäßen Mitteln ebenfalls hervorragend bekämpft.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Obgleich die erfindungsgemäßen herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, insbesondere Soja, oder Gramineen-Kulturen wie Weizen, Gerste, Roggen, Reis oder Mais, nur unwesentlich oder gar nicht geschädigt. Die vorliegenden Verbindungen eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die erfindungsgemäßen herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregem von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Emteguts bekannt.

Bevorzugt ist die Anwendung der erfindungsgemäßen Mittel in wirtschaftlich bedeutenden transgenen Kulturen von Nutz- und Zierpflanzen, z. B. von Getreide wie Weizen, Gerste, Roggen, Hafer, Hirse, Reis, Maniok und Mais oder auch Kulturen von Zuckerrübe, Baumwolle, Soja, Raps, Kartoffel, Tomate, Erbse und anderen Gemüsesorten. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäßen herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist somit auch die Verwendung der erfindungsgemäßen Mittel als Herbizide zur Bekämpfung von Schadpflanzen, vorzugsweise in Pflanzenkulturen, wobei die Pflanzenkulturen auch transgene Pflanzenkulturen sein können.

Die erfindungsgemäßen herbiziden Mittel können auch nicht-selektiv zur Bekämpfung unerwünschten Pflanzenwuchses eingesetzt werden, z.B. an Wegrändern, Plätzen, Industrieanlagen oder Eisenbahnanlagen.

Aufgrund der relativ geringen Aufwandmenge der erfindungsgemäßen herbiziden Mittel ist deren Verträglichkeit in aller Regel schon sehr gut. Insbesondere wird durch die erfindungsgemäßen Kombinationen eine Senkung der absoluten Aufwandmenge erreicht, verglichen mit der Einzelanwendung eines herbiziden Wirkstoffs.

Um die Verträglichkeit und/oder Selektivität der erfindungsgemäßen herbiziden Mittel gewünschtenfalls noch zu steigern kann es von Vorteil sein, diese gemeinsam in Mischung oder zeitlich - getrennt nacheinander zusammen mit Safenern oder Antidots anzuwenden.

Als Safener oder Antidots für die erfindungsgemäßen herbiziden Mittel in Frage kommende Verbindungen sind z. B. aus EP-A-333 131 (ZA-89/1960), EP-A-269 806 (US-A-4,891,057), EP-A-346 620 (AU-A-89/34951) und den internationalen Patentanmeldungen PCT/EP 90/01966 (WO-91108202) und PCT/EP 90102020 (WO-911078474) und dort zitierter Literatur bekannt oder können nach den dort beschriebenen Verfahren hergestellt werden. Weitere geeignete Safener kennt man aus EP-A-94 349 (US-A-4,902,304), EP-A-191 736 (US-A-4,881,966) und EP-A-0 492 366 und der dort zitierten Literatur.

In einer bevorzugten Ausführungsform enthalten die herbiziden Mittel der vorliegenden Erfindung daher einen zusätzlichen Gehalt an C) einer oder mehrerer Verbindungen, die als Safener oder Antidots wirken.

Bevorzugte Antidots oder Safener oder Gruppen von Verbindungen die sich als Safener oder Antidots in den erfindungsgemäßen herbiziden Mitteln eignen sind unter anderem:
a) Verbindungen vom Typ der Dichlorphenylpyrazolin-3-carbonsäure, vorzugsweise Verbindungen wie 1-(2,4-Dichlorphenyl)-5-(ethoxycarbonyl)-5-methyl-2-pyrazolin-3-carbonsäureethylester (Mefenpyr-diethyl, Verbindung C1 -1) und verwandte Verbindungen, wie sie in der internationalen Anmeldung WO 91/07874 (PCT/EP 90102020) beschrieben sind;
b) Derivate der Dichlorphenylpyrazolcarbonsäure, vorzugsweise Verbindungen wie 1-(2,4-Dichlorphenyl)-5-methyl-pyrazol-3-carbonsäureethylester (Verbindung C1-2), 1-(2,4-Dichlorphenyl)-5-isopropyl-pyrazol-3-carbonsäureethylester (Verbindung C1 -3), 1-(2,4-Dichlorphenyl)-5-(1,1-dimethyl-ethyl)pyrazol-3-carbonsäureethylester (Verbindung C1-4), 1-(2,4-Dichlorphenyl)-5-phenyl pyrazol-3-carbonsäureethylester (Verbindung C1-5) und verwandte Verbindungen, wie sie in EP-A-0 333 131 und EP-A-0 269 806 beschrieben sind;
c) Verbindungen vom Typ der Triazolcarbonsäuren, vorzugsweise Verbindungen wie 1-(2,4-Dichlorphenyl)-5-trichlormethyl-(1 H)-1,2,4-triazol-3-carbonsäureethylester (Verbindung C1 -6, Fenchlorazol-ethyl) und verwandte Verbindungen (siehe EP-A-0 174 562 und EP-A-0 346 620);
d) Verbindungen vom Typ der Dichlorbenzyl-2-isoxazolin-3-carbonsäure, Verbindungen vom Typ der 5-Benzyl- oder 5-Phenyl-2-isoxazolin-3-carbonsäure, vorzugsweise Verbindungen wie 5-(2,4-Dichlorbenzyl)-2-isoxazolin-3-carbonsäureethylester (Verbindung C1 -7) oder 5-Phenyl-2-isoxazolin-3-carbonsäureethylester (Verbindung C1 -8) und verwandte Verbindungen wie sie in der internationalen Patentanmeldung WO 91/08202 (PCT/EP 90/01966) beschrieben sind;
e) Verbindungen vom Typ der 8-Chinolinoxyessigsäure, vorzugsweise Verbindungen wie (5-Chlor-8-chinolinoxy)-essigsäure-(1 -methyl-hex-1 -yl)-ester (Cloquintocet -mexyl, C2-1),
   (5-Chlor-8-chinolinoxy)-essigsäure-(1,3-dimethyl-but-1-yl)-ester (C2-2),
   (5-Chlor-8-chinolinoxy)-essigsäure-4-allyl-oxy-butylester (C2-3),
   (5-Chlor-8-chinolinoxy)-essigsäure-1 -allyl-oxy-prop-2-ylester (C2-4),
   (5-Chlor-8-chinolinoxy)-essigsäureethylester (C2-5),
   (5-Chlor-8-chinolinoxy)-essigsäuremethylester (C2-6),
   (5-Chlor-8-chinolinoxy)-essigsäureallylester (C2-7),
   (5-Chlor-8-chinolinoxy)-essigsäure-2-(2-prpyliden-iminoxy)-1-ethylester (C2-8), (5-Chlor-8-chinolinoxy)-essigsäure-2-oxo-prop-1-ylester (C2-9) und
   verwandte Verbindungen wie sie in EP-A-0 086 750, EP-A-0 094 349 und EP-A-0 191 736 oder EP-A-0 492 366 beschrieben sind;
f) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-malonsäurediallyester, (5-Chlor-8-chinolinoxy)-malonsäuremethylethylester und verwandte Verbindungen wie sie in der deutschen Patentanmeldung EP-A-0 582 198 beschrieben und vorgeschlagen worden sind;
g) Wirkstoffe vom Typ der Phenoxyessig- bzw. -propionsäurederivate bzw. der aromatischen Carbonsäuren, wie z. B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba);
h) Verbindungen vom Typ der 5,5-Diphenyl-2-isoxazolin-3-carbonsäure, vorzugsweise 5,5-Diphenyl-2-isoxazolin-3-carbonsäureethylester (Isoxadifenethyl, C3-1);
i) Verbindungen, die als Safener z.B. für Reis bekannt sind wie Fenclorim (= 4,6-Dichlor-2-phenylpyrimidin, Pesticide Manual, 11. Auflage, 1997, S. 511-512), Dimepiperate (= Piperidin-1 -thiocarbonsäure-S-1 -methyl-1 -phenylethylester, Pesticide Manual, 11. Auflage, 1997, S. 404-405), Daimuron (= 1 -(1 -Methyl- 1-phenylethyl)-3-p-tolyl-harnstoff, Pesticide Manual, 11. Auflage, 1997, S. 330), Cumyluron (= 3-(2-Chlorphenylmethyl)-1 -(1 -methy)-1-phenyl-ethyl)- harnstoff, JP-A-60/087254), Methoxyphenon (= 3,3'-Dimethyl-4-methoxy- benzophenon, CSB (= 1-Brom-4-(chlormethylsulfonyl)-benzol, CAS-Reg. Nr. 54091-06-4).
   Die genannten Verbindungen sind außerdem zumindest teilweise in der EP-A-0 640 587 beschrieben, auf die hiermit zu Offenbarungszwecken Bezug genommen wird.
j) Eine weitere wichtige Gruppe von als Safenern und Antidoten geeignete Verbindungen ist aus der WO 95107897 bekannt.

Die Safener (Antidote) der vorstehenden Gruppen a) bis j) reduzieren oder unterbinden phytotoxische Effekte, die beim Einsatz der herbiziden Mittel gemäß der Erfindung in Nutzpflanzenkulturen auftreten können, ohne die Wirksamkeit der Herbizide gegen Schadpflanzen zu beeinträchtigen. Hierdurch kann das Einsatzgebiet der erfindungsgemäßen herbiziden Mittel erheblich erweitert werden und insbesondere ist durch die Verwendung von Safenern der Einsatz von Kombinationen möglich, die bislang nur beschränkt oder mit nicht ausreichendem Erfolg eingesetzt werden konnten, d. h. von Kombinationen, die ohne Safener in niedrigen Dosierungen mit wenig Breitenwirkung zu nicht ausreichender Kontrolle der Schadpflanzen führten.

Die herbiziden Mittel gemäß der Erfindung und die erwähnten Safener können zusammen (als fertige Formulierung oder im Tankmisch-Verfahren) oder in beliebiger Reihenfolge nacheinander ausgebracht werden. Das Gewichtsverhältnis Safener:Herbizid (Verbindung(en) der Formel (I)) kann innerhalb weiter Grenzen variieren und liegt vorzugsweise im Bereich von 1 : 100 bis 100 : 1, insbesondere von 1 : 10 bis 10: 1. Die jeweils optimalen Mengen an Herbizid(en) und Safener(n) sind üblicherweise vom Typ des herbiziden Mittels und/oder vom verwendeten Safener sowie von der Art des zu behandelnden Pflanzenbestandes abhängig.
Die Safener vom Typ C) können je nach ihren Eigenschaften zur Vorbehandlung des Saatgutes der Kulturpflanze (Beizung der Samen) verwendet werden oder vor der Saat in die Saatfurchen eingebracht oder zusammen mit der Herbizidmischung vor oder nach dem Auflaufen der Pflanzen angewendet werden.
Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit der Herbizidmischung. Hierzu können Tankmischungen oder Fertigformulierungen eingesetzt werden.

Die benötigten Aufwandmengen der Safener können je nach Indikation und verwendetem Herbizid innerhalb weiter Grenzen schwanken und liegen in der Regel im Bereich von 0,001 bis 1 kg, vorzugsweise 0,005 bis 0,2 kg Wirkstoff je Hektar. Gegenstand der vorliegenden Erfindung ist auch ein Verfahren zur Bekämpfung von unerwünschten Pflanzen, vorzugsweise in Pflanzenkulturen, das dadurch gekennzeichnet ist, daß eine herbizid wirksame Menge des erfindungsgemäßen herbiziden Mittels auf die Pflanzen, Pflanzenteile, Pflanzensamen oder die Anbaufläche ausgebracht wird.

Eine bevorzugte Verfahrensvariante ist die Ausbringung der erfindungsgemäßen herbiziden Mittel in Form von Tankmischungen, wobei die Einzelkomponenten, z.B. in Form von Formulierungen, gemeinsam im Tank mit Wasser oder einem Öl gemischt werden und die erhaltene Spritzbrühe ausgebracht wird. Da die Kulturpflanzenverträglichkeit der erfindungsgemäßen Kombinationen bei gleichzeitig sehr hoher Kontrolle der Schadpflanzen ausgesprochen gut ist, können diese als selektiv angesehen werden. In bevorzugter Verfahrensabwandlung werden herbizide Mittel daher zur selektiven Bekämpfung unerwünschter Pflanzen eingesetzt.

Die Ausbringung der herbiziden Mittel kann in üblicher Weise erfolgen, zum Beispiel mit Wasser und / oder Öl als Träger in Spritzbrühmengen von etwa 0,5 - 4000, vorzugsweise 100 bis 1000 Liter/ha. Eine Anwendung der Mittel im sog. Low-Volume- und Ultra-Low-Volume-Verfahren (ULV) ist ebenso möglich wie ihre Applikation in Form von Granulaten und Mikrogranulaten.

Eine bevorzugte Verwendung betrifft den Einsatz von herbiziden Mitteln, die Gehalte von Verbindung A16 und B)-Komponenten in einer synergistisch wirksamen Menge aufweisen. Zur Erfindung gehören auch Mischungen von Verbindung A16 und einem oder mehreren Kombinationspartnem B), gegebenenfalls in Kombination mit einem oder mehreren Safenern C).

Daneben können in den herbiziden Mitteln der vorliegenden Erfindung zur Abrundung der Eigenschaften, im allgemeinen in untergeordneten Mengen, zusätzlich ein, zwei oder mehrere von der Verbindung A16 verschiedene agrochemische Wirkstoffe (z.B. Herbizide, Insektizide oder Fungizide) enthalten sein.

Damit ergeben sich zahlreiche Möglichkeiten mehrere Wirkstoffe miteinander zu kombinieren und gemeinsam zur Bekämpfung von Schadpflanzen, vorzugsweise in Pflanzenkulturen einzusetzen, ohne vom Gedanken der Erfindung abzuweichen.

Zusammenfassend kann gesagt werden, daß bei gemeinsamer Anwendung von Verbindung A16 mit einem Tensid B) eine ausgezeichnete herbizide Wirkung erzielt wird. Dabei ist die Wirkung der erfindungsgemäßen herbiziden Mittel in einer bevorzugten Ausführungsform stärker als die Wirkung der eingesetzten Einzelkomponenten bei alleiniger Anwendung.

Diese Effekte erlauben unter anderem eine Reduzierung der Aufwandmenge, die Bekämpfung eines breiteren Spektrums von Unkräutern und Ungräsem, die Schließung von Wirkungslücken, auch hinsichtlich resistenter Arten, eine schnellere und sicherere Wirkung, eine komplette Kontrolle der Schadpflanzen mit nur einer oder wenigen Applikationen, und eine Ausweitung des Anwendungszeitraumes.

Die genannten Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch die erfindungsgemäßen Kombinationen bezüglich der beschriebenen Eigenschaften deutlich übertroffen. Darüberhinaus gestatten die erfindungsgemäßen Kombinationen in hervorragender Weise die Bekämpfung ansonsten resistenter Schadpflanzen

### Beispiele

Samen bzw. Rhizomstücke von mono- und dikotylen Unkräutern wurden in Plastiktöpfen in sandigem Lehmboden ausgelegt, mit Erde abgedeckt und im Gewächshaus unter guten Wachstumsbedingungen angezogen. Drei Wochen nach der Aussaat wurden die Versuchspflanzen im Dreiblattstadium behandelt. Die als Spritzpulver bzw. als Emulsionskonzentrate formulierten erfindungsgemäßen Mittel wurden in verschiedenen Dosierungen mit einer Wasseraufwandmenge von umgerechnet 600-800l/ha auf die grünen Pflanzenteile gesprüht. Nach ca. 3 bis 4 Wochen Standzeit der Versuchspflanzen im Gewächshaus unter optimalen Wachstumsbedingungen wurde die Wirkung der Präparate optisch im Vergleich zu unbehandelten Kontrollen bonitiert. Die erfindungsgemäßen Mittel weisen eine gute herbizide Wirksamkeit gegen wirtschaftlich wichtige Schadpflanzen auf.

## Patentansprüche

1. Herbizides Mittel, enthaltend
A) die Verbindung der Formel A16 (Komponente A) 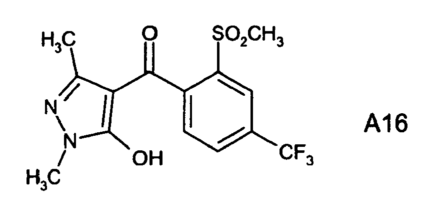 und
B) ein Tensid der Formel (II) (Komponente B)
R^{γ}-(EO)ₓ (PO)_{y} (EO)_{z}-R^{δ} (II),
worin die Subsituenten und Indices folgende Bedeutungen haben:
PO bedeutet eine Propylenoxy-Einheit;
EO bedeutet eine Ethylenoxy-Einheit;
und
a)
R^{γ} bedeutet Octyloxy;
R^{δ} bedeutet Wassserstoff;
x bedeutet 10, 12 oder 15, und
y und z bedeuten jeweils 0; oder
b)
R^{γ} bedeutet Decyloxy;
R^{δ} bedeutet Wassserstoff;
x bedeutet 10, 15 oder 20, und
y und z bedeuten jeweils 0; oder
c)
R^{γ} bedeutet Tridecyloxy;
R^{δ} bedeutet Wassserstoff;
x bedeutet 10, 11, 12, 13, 14, 15, 16, 17, 18, 19, 20, 25 oder 30 und
y und z bedeuten jeweils 0; oder
d)
R^{γ} bedeutet Tridecyloxy;
R^{δ} bedeutet Methyl;
x bedeutet 15 oder 17 und
y und z bedeuten jeweils 0; oder
e)
R^{γ} bedeutet Tridecyloxy;
R^{δ} bedeutet Methylcarbonyl;
x bedeutet 15 oder 17 und
y und z bedeuten jeweils 0; oder
f)
R^{γ} bedeutet Dodecyloxy;
R^{δ} bedeutet Wassserstoff;
x bedeutet 10, 11, 12, 13, 14, 15, 16, 17 oder 20 und
y und z bedeuten jeweils 0; oder
g)
R^{γ} bedeutet Dodecyloxy;
R^{δ} bedeutet Methyl oder Methylcarbonyl;
x bedeutet 15, und
y und z bedeuten jeweils 0; oder
h)
R^{γ} bedeutet Tetradecyloxy;
R^{δ} bedeutet Wasserstoff;
x bedeutet 10, 11, 12, 13, 14, 15, 16, 17, 18, 19, 20, 25, 30 oder 40, und
y und z bedeuten jeweils 0; oder
i)
R^{γ} bedeutet Hexadecyloxy;
R^{δ} bedeutet Wasserstoff;
x bedeutet 10, 15, 20 oder 40, und
y und z bedeuten jeweils 0; oder
j)
R^{γ} bedeutet Octadecyloxy;
R^{δ} bedeutet Wasserstoff;
x bedeutet 15 oder 20, und
y und z bedeuten jeweils 0; oder
k)
R^{γ} bedeutet Nonylcarbonyloxy;
R^{δ} bedeutet Methyl;
x bedeutet 10, 11, 12, 13, 14, 15, 16 oder 20, und
y und z bedeuten jeweils 0; oder
l)
R^{γ} bedeutet Decylcarbonyloxy;
R^{δ} bedeutet Methyl;
x bedeutet 10, 15 oder 20, und
y und z bedeuten jeweils 0; oder
m)
R^{γ} bedeutet Undecylcarbonyloxy;
R^{δ} bedeutet Methyl;
x bedeutet 10, 11, 12, 13, 14, 15, 16, 17, 20 oder 25, und
y und z bedeuten jeweils 0; oder
n)
R^{γ} bedeutet Dodecylcarbonyloxy;
R^{δ} bedeutet Methyl;
x bedeutet 10, 15, 20 oder 25, und
y und z bedeuten jeweils 0; oder
o)
R^{γ} bedeutet Tridecylcarbonyloxy;
R^{δ} bedeutet Methyl;
x bedeutet 10, 15 oder 20, und
y und z bedeuten jeweils 0; oder
p)
R^{γ} bedeutet Pentadecylcarbonyloxy;
R^{δ} bedeutet Methyl;
x bedeutet 15 oder 20, und
y und z bedeuten jeweils 0; oder
q)
R^{γ} bedeutet Nonylcarbonyloxy;
R^{δ} bedeutet Nonylcarbonyl;
x bedeutet 10, 15 oder 20, und
y und z bedeuten jeweils 0; oder
r)
R^{γ} bedeutet Undecylcarbonyloxy;
R^{δ} bedeutet Undecylcarbonyl;
x bedeutet 10, 15, 20 oder 30, und
y und z bedeuten jeweils 0; oder
s)
R^{γ} bedeutet Dodecylcarbonyloxy;
R^{δ} bedeutet Dodecylcarbonyl;
x bedeutet 10, 15 oder 20, und
y und z bedeuten jeweils 0; oder
t)
R^{γ} bedeutet Tridecylcarbonyloxy;
R^{δ} bedeutet Tridecylcarbonyl;
x bedeutet 10 oder 20, und
y und z bedeuten jeweils 0; oder
u)
R^{γ} bedeutet Pentadecylcarbonyloxy;
R^{δ} bedeutet Pentadecylcarbonyl;
x bedeutet 10 oder 15, und
y und z bedeuten jeweils 0; oder
v)
R^{γ} bedeutet Isotridecylcarbonyloxy;
R^{δ} bedeutet Wasserstoff;
x bedeutet 0;
y bedeutet 2 oder 5;
z bedeutet 10, oder
w)
R^{γ} bedeutet Isotridecylcarbonyloxy;
R^{δ} bedeutet Wasserstoff;
x bedeutet 10;
y bedeutet 2;
z bedeutet 0, oder
x)
R^{γ} bedeutet Isotridecylcarbonyloxy;
R^{δ} bedeutet Wasserstoff;
x bedeutet 10;
y bedeutet 5;
z bedeutet 10, oder
y)
R^{γ} bedeutet einen Rest aus der Gruppe 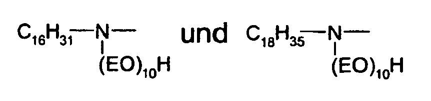
R^{δ} bedeutet Wasserstoff;
x bedeutet 10;
y und z bedeuten jeweils 0; oder
z)
R^{γ} bedeutet Pentadecylcarbonyloxy oder Heptadecylcarbonyloxy;
R^{δ} bedeutet Methyl;
x bedeutet 9;
y bedeutet 2;
z bedeutet 0; oder
aa)
R^{γ} bedeutet Dodecyloxy oder Tetradecyloxy;
R^{δ} bedeutet Wasserstoff;
x bedeutet 6;
y bedeutet 4;
z bedeutet 0.

2. Herbizides Mittel nach Anspruch 1, zusätzlich enthaltend eine oder mehrere weitere Komponenten aus der Gruppe enthaltend agrochemische Wirkstoffe anderer Art, im Pflanzenschutz übliche Zusatzstoffe und Formulierungshilfsmittel.

3. Verfahren zur Bekämpfung von Schadpflanzen, worin das herbizide Mittel, definiert gemäß Anspruch 1 oder 2, im Vorauflauf, Nachauflauf auf die Pflanzen, Pflanzenteile, Pflanzensamen oder die Anbaufläche appliziert wird.

4. Verfahren nach Anspruch 3 zur selektiven Bekämpfung von Schadpflanzen in Pflanzenkulturen.

5. Verwendung des nach Anspruch 1 definierten herbiziden Mittels zur Bekämpfung von Schadpflanzen.

6. Verfahren zur Herstellung eines herbiziden Mittels, definiert gemäß Anspruch 1, wobei die Komponente A) mit einem Tensid B) gemischt wird.

7. Verfahren gemäß Anspruch 6, worin die Komponenten A) und B) im Tankmischverfahren mit Wasser und / oder einem Öl gemischt werden.

## Claims

1. A herbicidal composition comprising
A) the compound of the formula A16 (component A) 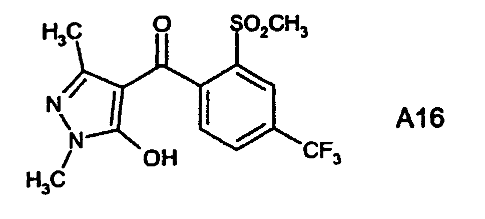 and
B) a surfactant of the formula (II) (component B)
R^{γ}-(EO)ₓ(PO)_{y}(EO)_{z}-R^{δ} (II),
where the substituents and indices have the following meanings:
PO denotes a propylene oxide unit;
EO denotes an ethylene oxide unit;
and
a)
R^{γ} denotes octyloxy;
R^{δ} denotes hydrogen;
x denotes 10, 12 or 15, and
y and z in each case denote 0; or
b)
R^{γ} denotes decyloxy;
R^{δ} denotes hydrogen;
x denotes 10, 15 or 20, and
y and z in each case denote 0; or
c)
R^{γ} denotes tridecyloxy;
R^{δ} denotes hydrogen;
x denotes 10, 11, 12, 13, 14, 15, 16, 17, 18, 19, 20, 25 or 30 and
y and z in each case denote 0; or
d)
R^{γ} denotes tridecyloxy;
R^{δ} denotes methyl;
x denotes 15 or 17 and
y and z in each case denote 0; or
e)
R^{γ} denotes tridecyloxy;
R^{δ} denotes methylcarbonyl;
x denotes 15 or 17 and
y and z in each case denote 0; or
f)
R^{γ} denotes dodecyloxy;
R^{δ} denotes hydrogen;
x denotes 10, 11, 12, 13, 14, 15, 16, 17 or 20 and
y and z in each case denote 0; or
g)
R^{γ} denotes dodecyloxy;
R^{δ} denotes methyl or methylcarbonyl;
x denotes 15, and
y and z in each case denote 0; or
h)
R^{γ} denotes tetradecyloxy;
R^{δ} denotes hydrogen;
x denotes 10, 11, 12, 13, 14, 15, 16, 17, 18, 19, 20, 25, 30 or 40, and
y and z in each case denote 0; or
i)
R^{γ} denotes hexadecyloxy;
R^{δ} denotes hydrogen;
x denotes 10, 15, 20 or 40, and
y and z in each case denote 0; or
j)
R^{γ} denotes octadecyloxy;
R^{δ} denotes hydrogen;
x denotes 15 or 20, and
y and z in each case denote 0; or
k)
R^{γ} denotes nonylcarbonyloxy;
R^{δ} denotes methyl;
x denotes 10, 11, 12, 13, 14, 15, 16 or 20, and
y and z in each case denote 0; or
l)
R^{γ} denotes decylcarbonyloxy;
R^{δ} denotes methyl;
x denotes 10, 15 or 20, and
y and z in each case denote 0; or
m)
R^{γ} denotes undecylcarbonyloxy;
R^{δ} denotes methyl;
x denotes 10, 11, 12, 13, 14, 15, 16, 17, 20 or 25, and
y and z in each case denote 0; or
n)
R^{γ} denotes dodecylcarbonyloxy;
R^{δ} denotes methyl;
x denotes 10, 15, 20 or 25, and
y and z in each case denote 0; or
o)
R^{γ} denotes tridecylcarbonyloxy;
R^{δ} denotes methyl;
x denotes 10, 15 or 20, and
y and z in each case denote 0; or
p)
R^{γ} denotes pentadecylcarbonyloxy;
R^{δ} denotes methyl;
x denotes 15 or 20, and
y and z in each case denote 0; or
q)
R^{γ} denotes nonylcarbonyloxy;
R^{δ} denotes nonylcarbonyl;
x denotes 10, 15 or 20, and
y and z in each case denote 0; or
r)
R^{γ} denotes undecylcarbonyloxy;
R^{δ} denotes undecylcarbonyl;
x denotes 10, 15, 20 or 30, and
y and z in each case denote 0; or
s)
R^{γ} denotes dodecylcarbonyloxy;
R^{δ} denotes dodecylcarbonyl;
x denotes 10, 15 or 20, and
y and z in each case denote 0; or
t)
R^{γ} denotes tridecylcarbonyloxy;
R^{δ} denotes tridecylcarbonyl;
x denotes 10 or 20, and
y and z in each case denote 0; or
u)
R^{γ} denotes pentadecylcarbonyloxy;
R^{δ} denotes pentadecylcarbonyl;
x denotes 10 or 15, and
y and z in each case denote 0; or
v)
R^{γ} denotes isotridecylcarbonyloxy;
R^{δ} denotes hydrogen;
x denotes 0;
y denotes 2 or 5;
z denotes 10, or
w)
R^{γ} denotes isotridecylcarbonyloxy;
R^{δ} denotes hydrogen;
x denotes 10;
y denotes 2;
z denotes 0, or
x)
R^{γ} denotes isotridecylcarbonyloxy;
R^{δ} denotes hydrogen;
x denotes 10;
y denotes 5;
z denotes 10, or
y)
R^{γ} denotes a residue from the group consisting of 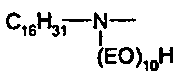 and 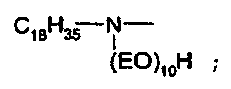
R^{δ} denotes hydrogen;
x denotes 10;
y and z in each case denote 0; or
z)
R^{γ} denotes pentadecylcarbonyloxy or heptadecylcarbonyloxy;
R^{δ} denotes methyl;
x denotes 9;
y denotes 2;
z denotes 0; or
aa)
R^{γ} denotes dodecyloxy or tetradecyloxy;
R^{δ} denotes hydrogen;
x denotes 6;
y denotes 4;
z denotes 0.

2. The herbicidal composition as claimed in claim 1, additionally comprising one or more further components selected from the group consisting of other types of agrochemical active substances, additives conventionally used in crop protection, and formulation auxiliaries.

3. A method of controlling harmful plants, wherein the herbicidal composition, which is as defined in claim 1 or 2, is applied pre- or post-emergence to the plants, plant parts, plant seeds or the area under cultivation.

4. The method as claimed in claim 3 for the selective control of harmful plants in crops.

5. The use of the herbicidal composition as defined in claim 1 for controlling harmful plants.

6. A method of preparing a herbicidal composition, which is as defined in claim 1, wherein component A) is mixed with a surfactant B).

7. The method as claimed in claim 6, wherein components A) and B) are mixed with water and/or an oil by the tank-mix method.

## Revendications

1. Agent herbicide, renfermant
A) le composé de formule A16 (composant A) 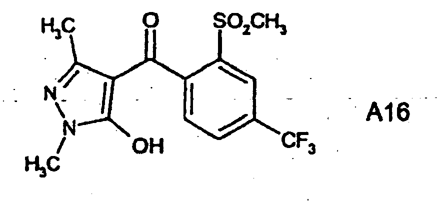 et
B) un agent de surface de formule (II) (composant B)
R^{γ}-(EO)ₓ (PO)_{y} (EO)_{z}-R^{δ} (II),
où les substituants et les indices possèdent les significations suivantes
PO représente une unité oxyde de propylène ;
EO représente une unité oxyde d'éthylène ;
et
a) R^{γ} représente un groupe octyloxy ;
R^{δ} représente un atome d'hydrogène ;
x vaut 10, 12 ou 15, et
y et z chacun vaut 0 ou
b) R^{γ} représente un groupe décyloxy ;
R^{δ} représente un atome d'hydrogène ;
x vaut 10, 15 ou 20, et
y et z chacun vaut 0 ; ou
c) R^{γ} représente un groupe tridécyloxy ;
R^{δ} représente un atome d'hydrogène ;
x vaut 10, 11, 12, 13, 14, 15, 16, 17, 18, 19, 20, 25 ou 30 et
y et z chacun vaut 0 ; ou
d) R^{γ} représente un groupe tridécyloxy ;
R^{δ} représente un groupe méthyle ;
x vaut 15 ou 17, et
y et z chacun vaut 0 ; ou
e) R^{γ} représente un groupe tridécyloxy ;
R^{δ} représente un groupe méthylcarbonyle ;
x vaut 15 ou 17, et
y et z chacun vaut 0 ; ou
f) R^{γ} représente un groupe dodécyloxy ;
R^{δ} représente un atome d'hydrogène ;
x vaut 10, 11, 12, 13, 14, 15, 16, 17 ou 20, et
y et z chacun vaut 0 ; ou
g) R^{γ} représente un groupe dodécyloxy ;
R^{δ} représente un groupe méthyle ou méthylcarbonyle ;
x vaut 15, et
y et z chacun vaut 0 ; ou
h) R^{γ} représente un groupe tétradécyloxy;
R^{δ} représente un atome d'hydrogène ;
x vaut 10, 11, 12, 13, 14, 15, 16, 17, 18, 19, 20, 25, 30 ou 40, et
y et z chacun vaut 0 ; ou
i) R^{γ} représente un groupe hexadécyloxy ;
R^{δ} représente un atome d'hydrogène ;
x vaut 10, 15, 20 ou 40 et
y et z chacun vaut 0 ; ou
j) R^{γ} représente un groupe octadécyloxy ;
R^{δ} représente un atome d'hydrogène ;
x vaut 15 ou 20, et
y et z chacun vaut 0 ; ou
k) R^{γ} représente un groupe nonylcarbonyloxy ;
R^{δ} représente un groupe méthyle ;
x vaut 10, 11, 12, 13, 14, 15, 16 ou 20, et
y et z chacun vaut 0 ; ou
l) R^{γ} représente un groupe décylcarbonyloxy ;
R^{δ} représente un groupe méthyle ;
x vaut 10, 15 ou 20, et
y et z chacun vaut 0 ; ou
m) R^{γ} représente un groupe undécylcarbonyloxy ;
R^{δ} représente un groupe méthyle ;
x vaut 10, 11, 12, 13, 14, 15, 16, 17, 20 ou 25, et
y et z chacun vaut 0 ; ou
n) R^{γ} représente un groupe dodécylcarbonyloxy ;
R^{δ} représente un groupe méthyle;
x vaut 10, 15, 20 ou 25, et
y et z chacun vaut 0 ; ou
o) R^{γ} représente un groupe tridécylcarbonyloxy ;
R^{δ} représente un groupe méthyle ;
x vaut 10, 15 ou 20, et
y et z chacun vaut 0 ; ou
p) R^{γ} représente un groupe pentadécylcarbonyloxy ; R^{δ} représente un groupe méthyle ;
x vaut 15 ou 20, et
y et z chacun vaut 0 ; ou
q) R^{γ} représente un groupe nonylcarbonyloxy ;
R^{δ} représente un groupe nonylcarbonyle ;
x vaut 10, 15 ou 20, et
y et z chacun vaut 0 ; ou
r) R^{γ} représente un groupe undécylcarbonyloxy ;
R^{δ} représente un groupe undécylcarbonyle ;
x vaut 10, 15, 20 ou 30, et
y et z chacun vaut 0 ; ou
s) R^{γ} représente un groupe dodécylcarbonyloxy ;
R^{δ} représente un groupe dodécylcarbonyle ;
x vaut 10, 15 ou 20, et
y et z chacun vaut 0 ; ou
t) R^{γ} représente un groupe tridécylcarbonyloxy ; R^{δ} représente un groupe tridécylcarbonyle ;
x vaut 10 ou 20, et
y et z chacun vaut 0 ; ou
u) R^{γ} représente un groupe pentadécylcarbonyloxy ; R^{δ} représente un groupe pentadécylcarbonyle ;
x vaut 10 ou 15, et
y et z chacun vaut 0 ; ou
v) R^{γ} représente un groupe isotridécyl-carbonyloxy ;
R^{δ} représente un atome d'hydrogène ;
x vaut 0 ;
y vaut 2 ou 5 ;
z vaut 10, ou
w) R^{γ} représente un groupe isotridécyl-carbonyloxy;
R^{δ} représente un atome d'hydrogène ;
x vaut 10;
y vaut 2;
z vaut 0, ou
x) R^{γ} représente un groupe isotridécyl-carbonyloxy ;
R^{δ} représente un atome d'hydrogène ;
x vaut 10;
y, vaut 5 ;
z vaut 10, ou
y) R^{γ} représente un reste pris dans le groupe 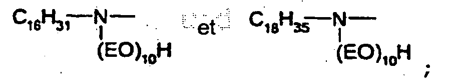 R^{δ} représente un atome d'hydrogène ;
x vaut 10;
y et z chacun vaut 0 ; ou
z) R^{γ} représente un groupe pentadécylcarbonyloxy ou heptadécylcarbonyloxy ;
R^{δ}, représente un groupe méthyle ;
x vaut 9;
y vaut 2;
z vaut 0, ou
aa) R^{γ} représente un groupe dodécyloxy ou tétradécyloxy ;
R^{δ} représente un atome d'hydrogène ;
x vaut 6 ;
y vaut 4 ;
z vaut 0.

2. Agent herbicide selon la revendication 1, renfermant de plus un ou plusieurs autres composants pris dans le groupe contenant des substances actives agrochimiques d'un type différent, des additifs et formulants usuels dans la phytoprotection.

3. Procédé pour la lutte contre les mauvaises herbes dans lequel l'agent herbicide défini selon la revendication 1 ou 2 est appliqué en prélevée, en postlevée aux plantes, aux parties de plantes, à la semence de plantes ou à la surface cultivable.

4. Procédé selon la revendication 3 pour la lutte sélective contre les mauvaises herbes dans les cultures de plantes.

5. Utilisation de l'agent herbicide défini selon la revendication 1 pour la lutte contre les mauvaises herbes.

6. Procédé pour la préparation d'un agent herbicide défini selon la revendication 1, où l'on mélange le composant A) avec le composant B.

7. Procédé selon la revendication 6, dans lequel on mélange les composants A) et B) dans un procédé de mélange en cuve avec l'eau et/ou avec une huile.
